(19) Europäisches Patentamt

European Patent Office

Office européen des brevets

(11) **EP 1 006 507 A1**

(12) **EUROPÄISCHE PATENTANMELDUNG**

(43) Veröffentlichungstag:
**07.06.2000 Patentblatt 2000/23**

(51) Int. Cl.[7]: **G10L 15/10**

(21) Anmeldenummer: **98811177.9**

(22) Anmeldetag: **27.11.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom Systec AG**
**5506 Mägenwil (CH)**

(72) Erfinder:
**Die Erfindernennung liegt noch nicht vor**

(74) Vertreter:
**Roshardt, Werner Alfred, Dipl.-Phys.**
**Keller & Partner**
**Patentanwälte AG**
**Zeughausgasse 5**
**Postfach**
**3000 Bern 7 (CH)**

(54) **Verfahren zur Durchführung einer Sprechererkennung**

(57)     Bei einem Verfahren zur Durchführung einer Sprechererkennung wird mit einem Kernalgorithmus aus einem Sprachproben-Signal ein Sprachproben-Merkmalsvektor extrahiert und mit einem Referenz-Merkmalsvektor (R) verglichen. Der Referenz-Merkmalsvektor wird wie folgt ermittelt: Es wird ein Mustersignal (S) einer vorgegebenen Länge aufgenommen. Das Mustersignal (S) wird in mehrere Muster-Teilsignale (S1, S2, S3) unterteilt. Mit einem Kernalgorithmus wird aus den Muster-Teilsignalen (S1, S2, S3) je ein Muster-Teilsignal-Merkmalsvektor (F1, F2, F3) extrahiert. Zu jedem Muster-Teilsignal-Merkmalsvektor (F1, F2, F3) wird ein Qualitätswert (Q1, Q2, Q3) des entsprechenden Muster-Teilsignals (S1, S2, S3) bestimmt. Der Referenz-Merkmalsvektor (R) wird unter Berücksichtigung der Quatitätswerte (Q1, Q2, Q3) aus den mehreren Muster-Teilsignal-Merkmalsvektoren (F1, F2, F3) ermittelt. Gemäss einer bevorzugten Ausführungsform werden nur solche Muster-Teilsignal-Merkmalsvektoren (F1, F2, F3) zur Bildung des Referenz-Merkmalsvektors (R) verwendet, deren Qualitätswerte (Q1, Q2, Q3) ein vorgegebenes Qualitätskriterium erfüllen. Als Qualitätskriterium kann ein maximal zulässiger euklidischer Abstand zwischen zwei Muster-Teilsignal-Merkmalsvektoren verwendet werden.

Fig. 2

Printed by Xerox (UK) Business Services
2.16.7 (HRS)/3.6

**Beschreibung**

**Technisches Gebiet**

Die Erfindung betrifft ein Verfahren zur Durchführung einer Sprechererkennung, wobei mit einem Kernalgorithmus aus einem Sprachproben-Signal ein Sprachproben-Merkmalsvektor extrahiert und mit einem Referenz-Merkmalsvektor verglichen wird, welcher auf der Basis eines Mustersignals einer vorgegebenen Länge bestimmt worden ist.

**Stand der Technik**

Die Spracherkennung basiert auf Verarbeitungsalgorithmen, welche aus einem Sprachsignal eine Anzahl von charakteristischen Merkmalen extrahieren und mit abgespeicherten Referenzdaten vergleichen. In Abhängigkeit von der ermittelten Ähnlichkeit wird eine Zuordnung durchgeführt ("Erkennungsprozess").

Bei der Sprechererkennung geht es nicht darum, ein gesprochenes Wort in einen maschinengeschriebenen Text oder einen Befehl zur Steuerung einer Maschine umzuwandeln, sondern um die Stimme des Sprechers zu erkennen. Ein Verfahren für die Sprechererkennung ist z.B. aus der US 5,469,529 bekannt. Es hat zwei Phasen, nämlich eine Trainingsphase und eine Erkennungsphase (auch Testphase genannt). In der Trainingsphase werden aus den aufgenommenen Sprachsignalen Referenzdaten erzeugt und in der Erkennungsphase werden die Sprachproben mit den Referenzdaten verglichen, um einen Sprecher zu identifizieren bzw. zu verifizieren. In beiden Phasen wird das digitalisierte Sprachsignal zunächst einer sogenannten akustischen Analyse unterworfen, um danach eine Kovarianz-Matrix zu berechnen. In der Trainingsphase wird die Kovarianz-Matrix invertiert und in einer Datenbank als Muster bzw. Referenz abgespeichert. In der Testphase wird die Kovarianz-Matrix der Sprachprobe mit der in der Datenbank abgespeicherten invertierten Kovarianz-Matrix (Muster) multipliziert. Aus dem Produkt werden die Eigenwerte "$\lambda k$" und aus diesen ein Ähnlichkeitswert "S" bestimmt.

Das anhand der US 5,469,529 erläuterte Verfahren ist ein Beispiel für einen sogenannten Kernalgorithmus (weil es rechnerisch den Kern einer Sprechererkennung darstellt). Unter einem Kernalgorithmus wird im folgenden ein Verfahren verstanden, welches dazu bestimmt ist, ein Sprachproben-Testsignal mit einem Sprachproben-Mustersignal zu vergleichen und einen Ähnlichkeitswert zu berechnen.

Unter der Voraussetzung, dass gute Referenzsignale zur Verfügung stehen, sind die bekannten Kernalgorithmen heutzutage schon recht leistungsfähig. Soll nun aber die textunabhängige Sprechererkennung in Systemen mit einer grossen Anzahl von Benutzern (also quasi in öffentlichen Systemen) eingesetzt werden (z.B. Telefon-Banking, fernmündliche Bestellung von Waren), sind Effizienz, Zuverlässigkeit und Benutzerfreundlichkeit mit den bisherigen Verfahren allein nicht mehr ohne weiteres erfüllbar. Aus Effizienzgründen ist eine automatische Registrierung erwünscht. Diese kann in der Praxis aber nicht unter (idealen) Laborbedingungen erfolgen. Schlechte Registrierdaten können die Zuverlässigkeit der nachträglichen Identifikation bzw. Verifikation massgeblich herabsetzen.

**Darstellung der Erfindung**

Aufgabe der Erfindung ist es, ein Verfahren für die textunabhängige Sprechererkennung zu schaffen, welches benutzerfreundlich d.h. fehlertolerant ist, ohne dass dadurch die Erkennungszuverlässigkeit wesentlich beeinträchtigt wird.

Die Lösung ist durch die Merkmale des Anspruchs 1 definiert. Zur Bildung des Referenz-Merkmalsvektors wird also zunächst ein Referenz-Mustersignal (Sprachprobe) einer vorgegebenen Länge aufgenommen. Dieses Referenz-Mustersignal wird in mindestens zwei Intervalle unterteilt. Für jedes Intervall wird mit dem Kernalgorithmus ein Muster-Teilsignal-Merkmalsvektor berechnet. Zusätzlich wird zu jedem Muster-Teilsignal-Merkmalsvektor ein Qualitätswert der Sprachprobe ermittelt. Aus den Muster-Teilsignal-Merkmalsvektoren wird schliesslich unter Berücksichtigung der Qualitätswerte der Referenz-Merkmalsvektor abgeleitet.

Es ist also nicht nötig, ein ideales Referenz-Mustersignal zur Verfügung zu haben. Das aufgenommene Signal wird nämlich derart segmentiert, dass mehrere eigenständige Referenz-Muster entstehen. Es kann z. B. ein in Abhängigkeit vom Qualitätswert gewichtetes Mittel berechnet werden, so dass die guten Muster-Teilsignale merkmalsbestimmend sind.

Gemäss einer besonders bevorzugten Ausführungsform werden nur diejenigen Muster-Teilsignal-Merkmalsvektoren zur Erzeugung des Referenz-Merkmalsvektors verwendet, deren Qualitätswert ein vorgegebenes Qualitätskriterium (Mindestqualität) erfüllt. Tests haben nämlich gezeigt, dass ein wichtiger Grund für ungenügende Musterqualität darin besteht, dass der Benutzer beim Sprechen den Faden verliert und infolgedessen längere Sprechpausen macht (welche z. B. nur Hintergrundrauschen oder Räuspergeräusche des Benutzers enthalten).

Der Qualitätswert kann in unterschiedlicher Weise berechnet werden. Beispielsweise kann für jeden Muster-Teilsignal-Merkmalsvektor der euklidische Abstand (im n-dimensionalen Merkmalsraum) zu jedem anderen Muster-Teilsignal-Merkmalsvektor bestimmt werden. Aus diesen Abständen kann ein Mittelwert oder ein Medianwert errechnet werden. Ein Muster-Teilsignal-Merkmalsvektor mit einem geringen Anteil an gesprochener Sprache wird folglich weit entfernt von den guten Merkmalsvektoren liegen. Er kann bei der Referenzbildung beispielsweise völlig ausser Acht gelassen werden.

Sprechpausen können auch direkt aus dem niedrigen Signalpegel oder aus der gegenüber einem Sprachsignal unterschiedlichen Charakteristik der Merkmalsvektoren erkannt werden. Der Qualitätswert kann beispielsweise das zeitliche Verhältnis von Sprechpausen zur Intervallänge des Muster-Teilsignals sein.

Das Qualitätskriterium kann einem maximal zulässigen Wert der Standardabweichung der Abstands- bzw. Ähnlichkeitswerte entsprechen. Auf diese Weise kann das Referenz-Mustersignal als ganzes beurteilt und entsprechend als ganzes angenommen oder abgelehnt werden. Die Standardabweichung ist also quasi ein globales Kriterium.

In diesem Zusammenhang ist zu erwähnen, dass im Rahmen der Registrierung ohne Textvorgabe gearbeitet wird. Wenn der Benutzer einen selbst ausgedachten Text spontan spricht, kann mit verhältnismässig bescheidener Länge des Referenz-Mustersignals eine gute Signalstatistik erreicht werden. Das heisst, die Teilsignale in den weiter oben erwähnten Intervallen können mit guter Näherung als statistisch unabhängig betrachtet werden. Gemäss der Erfindung kann mit Referenz-Mustersignalen einer Länge von 20 s bis 40 s (z. B. 30 s) erfolgreich gearbeitet werden.

Mit Vorteil wird darauf geachtet, dass der Benutzer sich nicht auf die Wiederholung eines Wortes oder kurzen Satzes beschränkt (was die statistische Unabhängigkeit der Muster-Teilsignale beeinträchtigen würde).

Die zur Erzeugung der Teilsignale verwendeten Intervalle sollten eine Länge von mehr als 3 Sekunden (typische Länge eines gesprochenen Satzes) haben. Sind die Intervalle kürzer, haben die Teilsignale nicht mehr die erforderliche statistische Relevanz. Eine gute Statistik der Sprechermerkmale wird mit 5 Sekunden bis 10 Sekunden erreicht. Ein Referenz-Mustersignal einer Länge von 20 bis 40 Sekunden wird also in z. B. 3 bis 8 Intervalle gleicher Länge aufgeteilt. Diese Parameterwerte haben sich namentlich beim Kernalgorithmus gemäss US 5,469,529 bewährt. Andersartige Kernalgorithmen erfordern möglicherweise andere Intervalle.

Gemäss einer besonders bevorzugten Ausführungsform wird der Referenz-Merkmalsvektor an Langzeitveränderungen adaptiert. Im Verlauf der Jahre kann sich die Stimme des Benutzers verändern. Um zu vermeiden, dass sich die Erkennungsrate dadurch sukzessive verschlechtert, wird gemäss der Erfindung eine Adaption auf der Basis von ausgewählten Sprachproben durchgeführt. (Der Benutzer muss sich also nicht einer - meist als unangenehm empfundenen - erneuten Registrierungsprozedur unterziehen.) Zu diesem Zweck werden Sprachprobensignale herangezogen, welche nach der Benutzerregistrierung im Laufe der Zeit zur Identifikation bzw. Verifikation aufgenommen worden sind und einen grossen Ähnlichkeitswert zum bisherigen Referenz-Merkmalsvektor haben. Diese Vektoren werden mit dem bisherigen Referenz-Merkmalsvektor zu einem adaptierten Referenz-Merkmalsvektor verwertet.

Eine erste Verfahrensvariante besteht darin, dass die nachträglich aufgenommenen Sprachprobensignale zum ursprünglichen Referenz-Mustersignal hinzugefügt werden, dass das adaptierte Referenz-Mustersignal auf die vorgegebene Länge begrenzt wird (durch Entfernen einiger alter Signalabschnitte) und dass aus diesem Signal der Referenz-Merkmalsvektor neu berechnet wird.

Es ist auch möglich, direkt aus den Merkmalsvektoren der Referenz und der Sprachprobe einen adaptierten Referenz-Merkmalsvektor nach dem der Erfindung zugrunde liegenden Prinzip zu generieren.

Das Verfahren kann mit an sich bekannten Schaltungselementen durchgeführt werden (Signalprozessoren, Rechenprozessoren, Langzeit-Speicherschaltungen, ASICs etc.). Die Benutzerregistrierung und die Benutzerverifikation erfolgt typischerweise über das Telefon. Der Benutzer ruft also eine Zentrale an und lässt sich mit einem Sprachmuster registrieren. Bei späteren Dienstleistungs- oder Warenbezügen wird die Verifikation auf der Basis von Sprachproben durchgeführt. Ist die Sprachprobe gut, wird sie für eine spätere Adaption des Referenz-Merkmalsvektors aufgehoben.

Die Verifikation eines Benutzers mit Hilfe der Sprechererkennung bietet sich in erster Linie dort an, wo die Kommunikation über die Sprache erfolgt, also beim Telefon. Die Qualität der Verbindung kann nun aber stark variieren. Damit die erfindungsgemässe Verkürzung der Sprechererkennung auch unter solchen Bedingungen funktioniert, kann das Sprachproben-Testsignal vorab einer Störungsanalyse unterworfen werden. Diese zeigt auf, ob und gegebenenfalls welche bekannten Störungstypen im Sprachproben-Testsignal vorhanden sind. Vor der Verarbeitung durch den Kernalgorithmus kann das Testsignal somit einer den gefundenen Störungstypen korrespondierenden Filterung unterzogen werden.

Ein Echo auf der Leitung kann beispielsweise einen bestimmten Störungstyp darstellen. Die korrespondierende Filterung wird also auf eine Echounterdrückung ausgerichtet sein. Echostörungen können natürlich unterschiedlich sein (z. B. hinsichtlich Stärke des Echosignals, hinsichtlich der Verzögerungszeit oder auch der Nachhallzeit). Unter Umständen kann es also auch sinnvoll bzw. notwendig sein, Echoparameter zu bestimmen und entsprechend unterschiedliche Filter anzuwenden. Als weiteres Beispiel sei das "knistern" einer Leitung erwähnt.

Das System verfügt demzufolge über eine Datenbank mit vorgegebenen Störungskompensationsfiltern, welche signalspezifisch angewendet werden, um ein korrigiertes respektive normiertes Sprachproben-Testsignal zu erhalten. Letzteres wird dann der Verarbeitung durch den Kernalgorithmus zugeführt.

Anstatt das aufgenommene Sprachproben-Testsignal zu filtern, kann es auch mit einem dem ermittelten Störungstyp entsprechenden Sprachproben-Mustersignal verglichen werden. Mit anderen Worten: Für einen bestimmten Benutzer wird eine Mehrzahl von Sprachproben-Mustersignalen abgespeichert, wobei jedes dieser Mustersignale einem durch einen bekannten Störeinfluss verzerrten benutzerspezifischen Referenzsignal entspricht.

Das erfindungsgemässe Verfahren kann mit einem softwaregesteuerten Computer durchgeführt werden. Bei Bedarf können auch anwendungsspezifische Schaltungen und schnelle Signalprozessoren zum Einsatz gelangen.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1     Eine schematische Darstellung des Pegels eines möglichen zeitlichen Signalverlaufs;

Fig. 2     ein Flussdiagramm zur Berechnung der Referenzdaten;

Fig. 3     eine schematische Darstellung der Konsistenzprüfung der Merkmalsvektoren.

Grundsätzlich sind in den Figuren gleiche Teile mit gleichen Bezugszeichen versehen.

**Wege zur Ausführung der Erfindung** Im nachfolgenden Ausführungsbeispiel geht es um eine zusätzliche Sicherheitsprüfung auf der Basis einer Sprechererkennung im Rahmen einer Telefon-Banking-Dienstleistung.

In einer ersten Phase muss der Bankkunde eine Registrierprozedur durchlaufen. Diese wird vorzugsweise telefonisch (bzw. über das Internet) durchgeführt. Es ist aber auch denkbar, dass die Registrierung in zweckspezifisch eingerichteten Räumlichkeiten der Bank erfolgt. Die zweitgenannte Variante hat den Vorteil, dass die Identität des Benutzers mit einfachen Mitteln (durch Sichtkontrolle der Identitätskarte, Pass, Führerschein) zuverlässig festgestellt werden kann. Im übrigen kann die akustische Qualität des aufgenommenen Sprachsignals besser kontrolliert werden.

Der Kunde (im folgenden Benutzer genannt) ruft eine Registrierzentrale an. Sein Anruf wird dort vorzugsweise von einem Computertelefon entgegengenommen. Dieses gibt die Instruktionen zur Führung des Benutzers aus und nimmt die erforderlichen Aufnahmen vor.

Der Benutzer wird als erstes aufgefordert, seinen PIN (Personal Identification Number) auf der Tastatur seines Telefons einzugeben. Die Identifikation kann auch dadurch erfolgen, dass der Benutzer eine persönliche Sicherheitskarte in einen Kartenleser einführt. (Der Kartenleser kann im Telefon integriert sein. Bei der Registrierung in spezifisch vorbereiteten Bankräumlichkeiten kann ein eigenständiger, mit dem Registriercomputer verbundener Kartenleser vorgesehen sein.)

Ist der Benutzer identifiziert, wird er aufgefordert, während 30 Sekunden einen beliebigen (z. B. frei erfundenen) Text zu sprechen. Die Aufnahme wird durch Drücken einer Taste des Telefons gestartet. Ist die Aufnahmezeit abgelaufen, ertönt ein Tonsignal.

Der Computer ermittelt nun die Referenzdaten. Ist die Qualität des aufgenommenen Signals ungenügend (z. B. weil der Benutzer nach 15 Sekunden nichts mehr zu sagen wusste oder weil die Telefonverbindung schlecht war), wird er aufgefordert, nochmals einen Registriertext zu sprechen. Dieser kann dann zur Vervollständigung des Referenzdatensatzes verwendet werden. Die Registrierung ist damit beendet.

Die Benutzung der Tele-Banking-Dienstleistung (nach erfolgreich abgeschlossener Registrierung) geht vorzugsweise wie folgt vor sich: Der Benutzer ruft in der Dienstleistungszentrale an und gibt dem Bankbeamten (oder dem Computersystem bzw. Computertelefon) seine Identität (z. B. durch Nennung seiner Kundennummer) bekannt. Das was der Benutzer sagt, kann gleichzeitig als Sprachprobe aufgenommen werden. Der Benutzer kann aber auch konkret aufgefordert werden, eine Sprachprobe abzugeben. Der Bankbeamte gibt die angegebene Identität in den Systemcomputer ein. Gleichzeitig kann die Sprachprobe mit einem vorgegebenen Kernalgorithmus analysiert und mit der Referenz verglichen werden. Liegt Ähnlichkeit zwischen der Sprachprobe und der Referenz vor, gilt der Benutzer als verifiziert und legitimiert, die gewünschte Dienstleistung zu veranlassen.

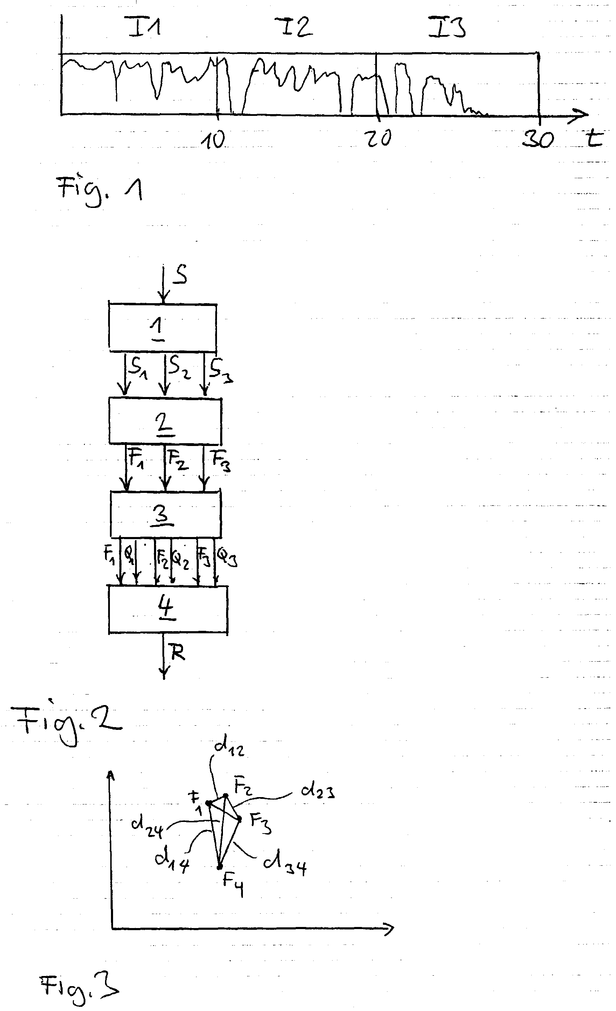

Die maschinelle Berechnung der Referenzdaten soll anhand der Fig. 1 und 2 erläutert werden.

Fig. 1 zeigt schematisch einen möglichen Zeitverlauf des Referenz-Mustersignals. Es hat eine Länge von 30 Sekunden, wobei die letzten 5 Sekunden aber keinen gesprochenen Text, sondern nur noch Hintergrundrauschen enthalten. Der Benutzer hat also vorzeitig aufgehört zu sprechen.

Gemäss der Erfindung wird das Referenz-Mustersignal S in mehrere Intervalle T1, T2, T3 unterteilt (Signalteiler 1). Die entsprechenden Signalabschnitte (Teilsignale) werden als statistisch unabhängige Muster-Teilsignale S1, S2, S3 an einen vordefinierten Kernalgorithmus 2 weitergegeben.

Der Kernalgorithmus 2 funktioniert in an sich bekannter Weise (vgl. z. B. US 5,469,529). Typischerweise werden die Eingangssignale in Fenster einer Länge von 20-30 ms aufgeteilt und nach physiologischen Kriterien spektral analysiert (FFT/Bark-Transformation). Die interessierenden charakteristischen Werte (Merkmale) können z. B. aus den frequenzbandspezifischen Signalleistungen oder aus Verhältnissen derselben abgeleitet werden.

Für jedes Muster-Teilsignal S1, S2, S3 wird auf diese Weise ein sogenannter Muster-Teilsignal-Merkmalsvektor F1, F2, F3 gebildet. (An die Stelle eines Merkmalsvektors kann natürlich auch eine Merkmalsmatrix treten. Die Komponenten dieses Vektors bzw. dieser Matrix sind die erwähnten charakteristischen Werte bzw. Merkmale.) Die Muster-Teilsignal-Merkmalsvektoren liegen in einem n-dimensionalen Merkmalsraum (z. B. n = 10).

Als nächstes wird zu jedem Muster-Teilsignal-Merkmalsvektor F1, F2, F3 ein Qualitätswert Q1, Q2, Q3 berechnet (Qualitätswertberechnung 3). Gemäss einer bevorzugten Ausführungsform wird für jeden Muster-Teilsignal-Merkmalsvektor F1, F2, F3 der euklidische Abstand dij zu den anderen ermittelt:

$$D_i = \sum_{j \neq i} d_{ij} = \sum_{j \neq i} \left| F_i - F_j \right| \qquad i, j = 1, ..., N \ (N = \text{Anzahl Merkmalsvektoren})$$

Dies ist in Fig. 3 veranschaulicht, welche symbolisch vier Merkmalsvektoren F1, F2, F3, F4 im n-dimensionalen Merkmalsraum zeigt. (Der einfachen Darstellbarkeit halber ist hier n = 2.) In diesem Beispiel liegen die ersten drei Merkmalsvektoren F1, F2, F3 relativ nahe beieinander (d. h. sie haben einen kleinen gegenseitigen Abstand). Der vierte Merkmalsvektor F4 liegt dagegen deutlich abseits, weil das zugrundeliegende Muster-Teilsignal (entsprechend dem Beispiel der Fig. 1) zu einem wesentlichen Teil aus Hintergrundrauschen besteht. Errechnet man aus der Summe Di der euklidischen Abstände dij einen Qualitätswert, wobei grosse Gesamtsummen als geringe Qualität eingestuft werden, dann erhält der vierte Muster-Teilsignal-Merkmalsvektor F4 den schlechtesten Qualitätswert.

Im nachfolgenden Diskriminator 4 wird entschieden, ob die Muster-Teilsignal-Merkmalsvektoren die erforderliche Konsistenz zur Bestimmung eines zuverlässigen Referenz-Merkmalsvektors haben. Zu diesem Zweck wird beispielsweise geprüft, ob die Qualitätswerte Q1, Q2, Q3 ein vorgegebenes Kriterium erfüllen. Liegen alle Qualitätswerte im gewünschten Qualitätsbereich, wird die Registrierung zugelassen und ein Referenz-Merkmalsvektor R ermittelt. Dieser kann z. B. dem Mittelwert der Muster-Teilsignal-Merkmalsvektoren entsprechen.

Liegen nicht alle Qualitätswerte im vorgegebenen Bereich, kann entweder die Registrierung insgesamt verworfen werden oder es können nur die qualitativ unzulässigen Vektoren eliminiert werden.

Als Konsistenzkriterium kann die Standardabweichung verwendet werden. Diese soll einen vordefinierten Grenzwert nicht überschreiten. Eine weitere Möglichkeit besteht darin, den grössten Abstand zwischen den Merkmalsvektoren mit einer Schwelle δ zu vergleichen.

Der Benutzer wird über das Ergebnis der obengenannten Auswertung informiert. Sofern die Registrierung nicht akzeptiert werden kann, wird er aufgefordert, erneut einen Text zu sprechen. Das oben beschriebene Registrierverfahren wird also wiederholt. Vorzugsweise werden diejenigen Intervalle des Referenz-Mustersignals des ersten Durchgangs bei der zweiten Auswertung mit berücksichtigt, welche eine ausreichend gute Qualität besassen. Es kann auch ein Ensemble von Referenz-Merkmalsvektoren aus allen Registrierdurchläufen gebildet werden, um aus diesem Ensemble den Referenz-Merkmalsvektor zu berechnen.

Ist die Registrierung abgeschlossen, kann die Verifikation des Benutzers in an sich bekannter Weise mit dem Kernalgorithmus durchgeführt werden. Das heisst, es wird eine Sprachprobe aufgenommen, nach vorgegebenen Parametern analysiert (zur Bildung eines Sprachproben-Merkmalsvektors) und mit der Referenz verglichen.

Beim vorliegenden Beispiel hat das Sprechererkennungssystem eine grosse Anzahl von Benutzern zu verwalten. In der Praxis ist also eine Datenbank erforderlich, welche die Referenz-Merkmalsvektoren und die zugehörigen Benutzeridentifikationen abspeichert. Es gibt dabei verschiedene Möglichkeiten, die Benutzerverifikation durchzuführen.

In der Regel wird sich der Benutzer nach dem Anruf bei der Dienstleistungszentrale identifizieren müssen. Dies kann durch Eingabe einer Kundennummer, eines Namens oder einer geheimen PIN erfolgen. Das System kann dann aus der Datenbank den entsprechenden Referenz-Merkmalsvektor holen und die im Rahmen der Benutzerverifikation abzugebende Sprachprobe analysieren. Liegt der Ähnlichkeitswert zwischen Sprachprobe und Referenz innerhalb eines vorgegebenen Bereiches, wird die Verifikation akzeptiert. Bei ungenügender Ähnlichkeit kann z. B. ein weiterer Verifikationsversuch durchgeführt werden. (Aus Sicherheitsgründen muss die Anzahl der Verifikationsversuche begrenzt sein.)

Alternativ kann der Sprachproben-Merkmalsvektor mit allen Referenz-Merkmalsvektoren verglichen werden, um dann eine Liste derjenigen Benutzer zu erzeugen, deren Referenz-Merkmalsvektor innerhalb eines vordefinierten Ähnlichkeitsbereiches liegt. Ist die Identifikation des zu überprüfenden Benutzers in der erstellten Liste enthalten, wird die Verifikation akzeptiert. Eine weitere Variante besteht darin, eine auf den Ähnlichkeitswert gestützte Rangliste der nächsten Nachbarn zu erstellen. Ist die Identifikation des Benutzers innerhalb der z. B. 10 nächsten Nachbarn, wird die Berechtigung des Benutzers anerkannt.

Die Performance eines Sprechererkennungssystems wird durch die Qualität der Sprachproben beeinflusst bzw. mitbestimmt. Bei einer Verifikation (oder auch Registrierung) über das Telefon können z. B. folgende Störungen auftreten:

- Datenreduzierende Codecs (wie sie bei GSM und DECT zur Anwendung kommen),

- Unterschiedliche Mikrofoneigenschaften (bzw. Eigenschaften der Sound-Karten bei Internet-Anwendungen),

- Spezifische Eigenschaften von Freisprechmikrofonen,

- Umgebungsgeräusche (Fahr- und Motorengeräusche, Strassenlärm etc.).

Gemäss einer besonders bevorzugten Ausführungsform werden diese Störeinflüsse berücksichtigt, indem sie analysiert und erkannt und in den Signalverarbeitungsprozess einbezogen werden. Dazu wird die Sprachprobe mit bekannten Mitteln der Signal-Verarbeitung (Filterung, zeitliche und spektrale Analyse) auf bekannte Störeinflüsse hin untersucht. Ein Beispiel eines solchen Verfahrens ist aus der WO 98/06196 (Ascom Systec) bekannt.

Wird ein bestimmter Störeinfluss entdeckt, werden die Sprachdaten so vorverarbeitet, dass sich ein normiertes qualitatives Sprachmuster ergibt. Da die verarbeitbaren Störeinflüsse bekannt sind, können auch die zugehörigen Massnahmen bei der Systemkonfiguration eingebaut werden. Ein Rechenbedarf ergibt sich dann nur für die Bereiche "Störungserkennung" und "Störungsunterdrückung/Störungsbefreiung".

Es ist denkbar, dass die Zahl der vom System zu verarbeitenden Störungen so gross ist, dass kein ausreichend gutes normiertes Sprachmuster für alle Störungstypen ermittelt werden kann. Der Informationsverlust durch die Normierung kann also unter Umständen so gross sein, dass relevante sprecherspezifische Informationen verlorengehen (das Sprachmuster wäre zu wenig spezifisch für die nachfolgende Sprechererkennung). In diesem Fall ist es möglich, die Sprachproben der Registrierung in ihrer originalen, eventuell gestörten Qualität abzuspeichern und zwar zusammen mit einer Information über die Art der Störung. In der Erkennungsphase wird nun die Qualität des Sprachproben-Testsignals bestimmt, um danach eine Konvertierungsvorschrift (Transformation) anzuwenden, welche das Sprachproben-Testsignal qualitätsmässig mit dem Referenz-Signal vergleichbar macht. Bei einer Anzahl n von möglichen Störeinflüssen ergeben sich n x n Transformationsregeln (n verschiedene Eingangssignale müssen in n verschiedene Ausgangssignale überführt werden können). Nach der Transformation wird der Kernalgorithmus angewendet.

Das soeben beschriebene Korrekturverlahren ist nicht auf die Verifikation von Benutzern beschränkt, sondern kann generell für die Sprechererkennung eingesetzt werden.

Gemäss einer besonders bevorzugten Ausführungsform der Erfindung werden Sprachproben (bzw. Sprachproben-Merkmalsvektoren) in der Datenbank abgespeichert, wenn sie eine grosse Ähnlichkeit mit der Referenz haben. Nach Ablauf einer systemintern definierten Periode (von z. B. 2 - 5 Jahren) wird eine automatische Überprüfung der Aktualität der Referenz-Merkmalsvektoren durchgeführt. Zu diesem Zweck kann eine statistische Analyse der Ähnlichkeit zwischen den qualitativ hochwertigen Sprachproben und der Referenz gemacht werden, um systematische Veränderungen der Stimme des Benutzers herausfiltern zu können. Wird festgestellt, dass ein Ensemble von aktuellen Sprachproben in sich konsistent ist aber keine gleichmässige Verteilung um die Referenz herum hat, dann kann eine Adaption (Neuberechnung) des Referenz-Merkmalsvektors durchgeführt werden. Es ist natürlich sicherzustellen, dass die Adaption nicht auf Grund von Daten durchgeführt wird, welche fälschlicherweise als richtig erkannt wurden (falsche Akzeptanz). Aus diesem Grund ist es wichtig, dass die abgespeicherten Sprachproben mit einem Qualitätswert versehen werden. Dieser kann (wie bereits beschrieben) mit dem Kernalgorithmus ermittelt werden und/oder eine Information über die Übertragungsqualität der Telefonleitung während der Aufnahme der Sprachprobe enthalten. Weil eine grosse Ähnlichkeit zwischen der Sprachprobe (welche zur Adaption verwendet werden soll) und der Referenz erforderlich ist, wird die Adaption nur kleine Änderungen der Referenz bewirken. Damit wird sichergestellt, dass auf den berechtigten Benutzer und nicht auf einen "Eindringling" adaptiert wird.

Die Adaption kann z. B. im Zeitbereich geschehen, indem die zur Registrierung verwendete Sprachprobe ganz oder zum Teil um die aktuelle Sprachprobe erweitert wird. Aus diesem neuen Mustersignal wird dann der adaptierte Referenz-Merkmalsvektor berechnet.

Die Adaption kann aber auch im Merkmalsraum durchgeführt werden. Hierzu werden in einem ersten Schritt die Merkmale der aktuellen Sprachprobe berechnet. Anschliessend werden diese in einem vorgegebenen oder einstellbaren Gewichtungsverhältnis mit den Muster-Teilsignal-Merkmalsvektoren kombiniert. Der entsprechende Ergebnis-Merkmals-vektor wird als neuer Referenz-Merkmalsvektor abgespeichert.

Es ist erkennbar, dass die Erfindung nicht auf einen bestimmten Kernalgorithmus ausgerichtet bzw. beschränkt ist. Es geht nur um Verfahrensschritte, die der Vorbereitung bzw. Aufbereitung eines Sprachproben-Signals für die Erzeugung einer Referenz und die nachfolgende Authentifikation bzw. Verifikation dienen. Mit der Erfindung kann die Leistung eines Kernalgorithmus (welche durch die Equal Error Rate definiert ist) wesentlich verbessert werden. Hat der Kernalgorithmus beispielsweise eine EER von 2%, dann kann in Verbindung mit der erfindungsgemässen Aufbereitung durchaus eine EER von unter 1% erreicht werden.

Die Erfindung ist überall dort anwendbar, wo eine Identifikation oder Verifikation des Benutzers sinnvoll oder vorteilhaft ist. Neben den bereits erwähnten Anwendungen kommen insbesondere die Zutrittskontrolle ("elektronische Schlösser"), die Computer-Zugriffskontrolle oder ganz allgemein die Prüfung der Berechtigung bei der Benutzung eines Gerätes (z. B. eines Telefons) in Frage.

Zusammenfassend ist festzustellen, dass mit verhältnismässig einfachen rechnerischen Massnahmen eine automatische Benutzerregistrierung durchgeführt werden kann, welche in nachträglichen Identifikations- und/oder Verifikationsverfahren eine hohe Erkennungssicherheit und gleichzeitig niedrige falsche Akzeptanz gewährleistet. Das System vermag fehlerhafte bzw. qualitativ unzureichende Sprachproben während der Registrierung zu erkennen. Dies ist wichtig für einen effizienten und zuverlässigen Betrieb von grossen Datenbanken (>1000 Teilnehmer).

**Patentansprüche**

1. Verfahren zur Durchführung einer Sprechererkennung, wobei mit einem Kernalgorithmus aus einem Sprachproben-Signal ein Sprachproben-Merkmalsvektor extrahiert und mit einem Referenz-Merkmalsvektor verglichen wird, welcher auf der Basis eines Mustersignals einer vorgegebenen Länge bestimmt worden ist, dadurch gekennzeichnet, dass zur Bildung des Referenz-Merkmalsvektors

   a) das Mustersignal (S) in mindestens zwei Muster-Teilsignale (S1, S2, S3) unterteilt wird,

   b) mit Hilfe des Kernalgorithmus (2) für jedes Muster-Teilsignal (S1, S2, S3) ein Muster-Teilsignal-Merkmalsvektor (F1, F2, F3) berechnet wird,

   c) zu jedem Muster-Teilsignal-Merkmalsvektor (F1, F2, F3) ein Qualitätswert (Q1, Q2, Q3) des entsprechenden Muster-Teilsignals (S1, S2, S3) bestimmt wird und

   d) der Referenz-Merkmalsvektor (R) unter Berücksichtigung der Qualitätswerte (Q1, Q2, Q3) aus den mehreren Muster-Teilsignal-Merkmalsvektoren (F1, F2, F3) ermittelt wird.

2. Verfahren nach Anspruch 1, dadurch gekennzeichnet, dass nur solche Muster-Teilsignal-Merkmalsvektoren (F1, F2, F3) zur Bildung des Referenz-Merkmalsvektors (R) verwendet werden, deren Qualitätswerte (Q1, Q2, Q3) ein vorgegebenes Qualitätskriterium erfüllen.

3. Verfahren nach Anspruch 1 oder 2, dadurch gekennzeichnet, dass als Qualitätsmerkmal ein Ähnlichkeitswert zwischen zwei Muster-Teilsignal-Merkmalsvektoren verwendet wird.

4. Verfahren nach Anspruch 3, dadurch gekennzeichnet, dass der Ähnlichkeitswert aus einem euklidischen Abstand zwischen zwei Muster-Teilsignal-Merkmalsvektoren berechnet wird.

5. Verfahren nach einem der Ansprüche 2 bis 4, dadurch gekennzeichnet, dass das Qualitätskriterium einem maximalen Abstand zu einem Mittelwert-Vektor oder einer maximalen Standardabweichung entspricht.

6. Verfahren nach einem der Ansprüche 1 bis 5, dadurch gekennzeichnet, dass die vorgegebene Länge einer Zeit von mindestens 20 Sekunden entspricht.

7. Verfahren nach einem der Ansprüche 1 bis 6, dadurch gekennzeichnet, dass die Muster-Teilsignale eine Länge von jeweils mindestens 3 Sekunden haben, um zumindest die Länge eines durchschnittlichen Sprachsatzes aufzuweisen.

8. Verfahren nach einem der Ansprüche 1 bis 7, dadurch gekennzeichnet, dass der Referenz-Merkmalsvektor an Langzeitveränderungen adaptiert wird, indem Sprachproben-Signale, welche nachträglich aufgenommen werden und einen grossen Ähnlichkeitswert zum bisherigen Referenz-Merkmalsvektor haben, zur Berechnung eines adaptierten Referenz-Merkmalsvektors verwendet werden.

9. Verfahren nach Anspruch 8, dadurch gekennzeichnet, dass zumindest ein Teil der nachträglich aufgenommenen Sprachprobensignale zu den Muster-Teilsignalen mit hinzugefügt werden und dass mit dem Kernalgorithmus daraus der adaptierte Referenz-Merkmalsvektor berechnet wird.

10. Verfahren nach Anspruch 8, dadurch gekennzeichnet, dass aus dem Referenz-Merkmalsvektor und den aus den Sprachprobensignalen abgeleiteten Sprachproben-Merkmalsvektoren der adaptierte Referenz-Merkmalsvektor ermittelt wird.

I1    I2    I3

10    20    30    t

Fig. 1

S

1

S₁  S₂  S₃

2

F₁  F₂  F₃

3

F₁ Q₁  F₂ Q₂  F₃ Q₃

4

R

Fig. 2

$d_{12}$

$F_2$    $d_{23}$

$F_1$

$d_{24}$    $F_3$

$d_{14}$    $d_{34}$

$F_4$

Fig. 3

Europäisches
Patentamt

# EUROPÄISCHER RECHERCHENBERICHT

Nummer der Anmeldung

EP 98 81 1177

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | US 5 469 529 A (BIMBOT FREDERIC ET AL) 21. November 1995 * Zusammenfassung * --- | 1 | G10L5/06 |
| A | EP 0 750 294 A (SHARP KK ;JAPAN IRON & STEEL FED (JP); REAL WORLD COMPUTING PARTNE) 27. Dezember 1996 * Zusammenfassung; Anspruch 3 * --- | 1 | |
| A | FISSORE L ET AL: "ANALYSIS AND IMPROVEMENT OF THE PARTIAL DISTANCE SEARCH ALGORITHM" SPEECH PROCESSING, MINNEAPOLIS, APR. 27 - 30, 1993, Bd. 2, 27. April 1993, Seiten II-315-318, XP000427789 INSTITUTE OF ELECTRICAL AND ELECTRONICS ENGINEERS * Zusammenfassung * ----- | 1 | |

RECHERCHIERTE SACHGEBIETE (Int.Cl.6)

G10L

Der vorliegende Recherchenbericht wurde für alle Patentansprüche erstellt

| Recherchenort | Abschlußdatum der Recherche | Prüfer |
|---|---|---|
| DEN HAAG | 29. April 1999 | Van Doremalen, J |

**ANHANG ZUM EUROPÄISCHEN RECHERCHENBERICHT
ÜBER DIE EUROPÄISCHE PATENTANMELDUNG NR.**

EP 98 81 1177

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-1999

| Im Recherchenbericht angeführtes Patentdokument | Datum der Veröffentlichung | Mitglied(er) der Patentfamilie | Datum der Veröffentlichung |
|---|---|---|---|
| US 5469529 A | 21-11-1995 | FR 2696036 A<br>DE 69319982 D<br>DE 69319982 T<br>EP 0589791 A<br>JP 6222791 A | 25-03-1994<br>03-09-1998<br>11-03-1999<br>30-03-1994<br>12-08-1994 |
| EP 0750294 A | 27-12-1996 | JP 9006385 A<br>US 5799275 A | 10-01-1997<br>25-08-1998 |

EPO FORM P0461

Für nähere Einzelheiten zu diesem Anhang : siehe Amtsblatt des Europäischen Patentamts, Nr.12/82